(19) **Europäisches Patentamt / European Patent Office / Office européen des brevets**

(11) **EP 1 588 561 B2**

(12) **NOUVEAU FASCICULE DE BREVET EUROPEEN**
Après la procédure d'opposition

(45) Date de publication et mention de la décision concernant l'opposition:
**25.12.2013 Bulletin 2013/52**

(45) Mention de la délivrance du brevet:
**13.10.2010 Bulletin 2010/41**

(21) Numéro de dépôt: **04704637.0**

(22) Date de dépôt: **23.01.2004**

(51) Int Cl.:
**H04N 7/26** *(2006.01)* **H04N 21/258** *(2011.01)*
**H04N 21/4405** *(2011.01)* **H04N 21/462** *(2011.01)*
**H04N 21/2347** *(2011.01)* **H04N 21/2662** *(2011.01)*

(86) Numéro de dépôt international:
**PCT/FR2004/050027**

(87) Numéro de publication internationale:
**WO 2004/068858 (12.08.2004 Gazette 2004/33)**

(54) **PROCEDE ET SYSTEME ADAPTATIF ET PROGRESSIF DE DISTRIBUTION SECURISEE D IMAGES FIXES CODEES EN ONDELETTES**

ADAPTIVES UND PROGRESSIVES SYSTEM UND VERFAHREN ZUR SICHEREN VERTEILUNG VON WAVELET-CODIERTEN STANDBILDERN

ADAPTIVE AND PROGRESSIVE SYSTEM AND METHOD FOR THE SECURE DISTRIBUTION OF WAVELET-CODED STILL IMAGES

(84) Etats contractants désignés:
**AT BE BG CH CY CZ DE DK EE ES FI FR GB GR HU IE IT LI LU MC NL PT RO SE SI SK TR**

(30) Priorité: **23.01.2003 FR 0300735**
**11.02.2003 FR 0301620**

(43) Date de publication de la demande:
**26.10.2005 Bulletin 2005/43**

(73) Titulaire: **Querell Data Limited Liability Company Dover, DE 19904 (US)**

(72) Inventeurs:
• **LECOMTE, Daniel**
**F-75116 Paris (FR)**
• **PARAYRE-MITZOVA, Daniela**
**F-75018 Paris (FR)**
• **CAPOROSSI, Jérôme**
**F-92340 Bourg-La-Reine (FR)**

(74) Mandataire: **Kazi, Ilya**
**Mathys & Squire LLP**
**120 Holborn**
**London EC1N 2SQ (GB)**

(56) Documents cités:
**EP-A- 0 920 209 WO-A-98/42098**

• ESKICIOGLU A M ET AL: "An integrated approach to encrypting scalable video" , vol. 1, 26 août 2002 (2002-08-26), pages 573-576, XP010604433
• ZENG W ET AL: "EFFICIENT FREQUENCY DOMAIN VIDEO SCRAMBLING FOR CONTENT ACCESS CONTROL" ACM MULTIMEDIA, PROCEEDINGS OF THE INTERNATIONAL CONFERENCE, NEW YORK, NY, US, 30 octobre 1999 (1999-10-30), pages 285-294, XP000956270
• GRIWODZ C ET AL: "PROTECTING VOD THE EASIER WAY" PROCEEDINGS OF THE ACM MULTIMEDIA 98. MM '98. BRISTOL, SEPT. 12 - 16, 1998, ACM INTERNATIONAL MULTIMEDIA CONFERENCE, NEW YORK, NY: ACM, US, vol. CONF. 6, 12 septembre 1998 (1998-09-12), pages 21-28, XP000977484 ISBN: 1-58113-036-8

Remarques:
Le dossier contient des informations techniques présentées postérieurement au dépôt de la demande et ne figurant pas dans le présent fascicule.

EP 1 588 561 B2

**Description**

La présente invention se rapporte au domaine du traitement d'images numériques codées en ondelettes.

On se propose dans la présente invention de fournir un système permettant d'embrouiller visuellement et de restaurer de manière progressive et adaptative le contenu original d'une image fixe numérique codée en ondelettes.

Le problème général est de fournir un procédé capable de transmettre de façon sécurisée des données numériques correspondant à des images de haute qualité à un format numérique quelconque, issu d'un codage en ondelettes, en direct ou en différé vers un écran de visualisation et/ou pour être enregistré sur le disque dur ou tout autre dispositif de sauvegarde appartenant à un boîtier reliant le réseau de télétransmission à un écran de type moniteur ou écran de télévision, tout en préservant la qualité visuelle mais en évitant toute utilisation frauduleuse comme la possibilité de faire des copies pirates des images codées numériquement. Les techniques classiques de cryptage consistent de manière générale à combiner (selon des opérations de type addition ou soustraction) avec les données d'origine des valeurs générées de manière pseudo-aléatoire et à partir d'une clé d'initialisation. La simple possession de cette clé permet ainsi le décryptage complet des données cryptées, celles-ci contenant en substance la totalité de l'information originale.

Dans la demande de brevet européenne référencée EP 1011269A1 et intitulé « System for processing an information signal », il est décrit une méthode de cryptage d'un signal d'information pouvant s'appliquer au cas des images fixes. La méthode consiste à ajouter au signal original non compressé un bruit pseudo-aléatoire de manière à obtenir un nouveau signal. Le signal ainsi crypté est ensuite compressé à l'aide des algorithmes standards adéquats puis transmis. La clé est quant à elle transmise de manière sécurisée à destination du futur utilisateur du signal crypté. Cette méthode connue peut s'appliquer au cas des images codées selon la norme JPEG.

Il n'est fait dans ce document de l'art antérieur aucune référence au cas des images codées par ondelettes. De plus, la possession de la clé conditionne totalement le décryptage du signal transmis.

Dans l'article « An integrated approach to encrypting scalable video », Eskicioglu et al., Proceedings of the 2002 IEEE International Conference on Multimedia and Expo, Lausanne, Suisse, les auteurs décrivent un procédé de génération, gestion et mise à jour de clés de cryptages utilisées pour protéger un flux binaire multi diffusé codant une séquence vidéo et présentant des propriétés de scalabilité (multi-couches). Le système de protection des flux décrit est un système dans lequel chaque couche est encryptée avec une clé secrète différente, cette clé étant connue par un groupe d'utilisateurs et pouvant changer de manière périodique au cours du temps et en fonction du nombre d'utilisateurs. Le système proposé repose donc sur des technologies de cryptages sélectifs classiques à l'aide d'une ou plusieurs clés : toutes les données sont présentes dans le flux protégé et elles conditionnent seules l'accès au contenu, par conséquent cet art antérieur ne résout pas le problème de haute sécurisation, objet de la présente invention.

Dans l'article « Protecting VoD the EasierWay », Griwodz et al., Proceedings of the ACM Multimedia, septembre 1998, les auteurs décrivent un procédé de distribution, via des réseaux larges bandes ou des serveurs temporaires et une connexion point à point sécurisée, de contenus multimédia protégés dont l'accès est contrôlé et tracé. Le flux initial codant le contenu audiovisuel original est délibérément corrompu par une modification prédéterminée de certains octets au sein du flux et un signal permettant sa reconstruction n'est transmis qu'ultérieurement au client au moment de la visualisation du contenu : une clé est d'abord communiquée au client qui lui permettra de recalculer l'emplacement des octets corrompus au sein du flux. Puis un signal contenant les octets originaux lui est envoyé après encryptage afin de reconstruire le flux initial. La reconstruction du flux est ainsi conditionnée par une clé et par conséquent le procédé décrit dans ce document de l'art antérieur n'apporte pas le haut niveau de sécurité proposé dans la présente invention.

WO2004/062287 concerne un procédé pour la distribution sécurisée d'images et fait partie de l'état de l'art comme une conséquence de l'article 54 (3) CBE.

La présente invention se rapporte plus particulièrement à un dispositif capable de transmettre de façon sécurisée un ensemble d'images numériques fixes de haute qualité visuelle vers un afficheur et/ou pour être enregistrées dans la mémoire du dispositif de sauvegarde d'un boîtier reliant le réseau de télétransmission à l'afficheur, tout en préservant la qualité visuelle mais en évitant la possibilité que ces images puissent être copiées de manière illicite.

L'invention concerne un procédé pour la distribution sécurisée d'images fixes numériques selon un format nominal issu du codage en ondelettes, représentées par un flux binaire constitué d'au moins un paquet (relatif à l'organisation de la séquence binaire) contenant au moins un bloc regroupant des éléments simples (par exemple des coefficients) codés numériquement selon un mode précisé à l'intérieur du flux concerné et utilisé par tous les décodeurs capables de le restituer ou de le décoder afin de pouvoir l'afficher correctement. Ce procédé comporte :

- une étape préparatoire consistant à modifier au moins un desdits éléments simples,
- une étape de transmission

  - d'un flux principal conforme au format nominal, constitué par les blocs et paquets modifiés au cours de l'étape préparatoire et

- par une voie séparée dudit flux principal d'une information numérique complémentaire permettant de reconstituer le flux original à partir du calcul sur l'équipement destinataire, en fonction dudit flux principal et de ladite information complémentaire. On définit ladite information complémentaire en tant qu'un ensemble constitué de données (par exemples des coefficients décrivant le flux numérique original ou extraits du flux original) et de fonctions (par exemple, la fonction substitution ou permutation). Une fonction est définie comme contenant au moins une instruction mettant en rapport des données et des opérateurs. Ladite information complémentaire décrit les opérations à effectuer pour restaurer le flux original à partir dudit flux modifié.

Dans la présente invention, on définit la notion de « flux » comme une séquence binaire structurée, constituée d'élément simples et ordonnés représentant sous forme codée des données et répondant à un standard ou à une norme audiovisuels donnés.

Le fait d'avoir enlevé une partie des données originales du flux d'origine lors de la génération du flux principal modifié, ne permet pas la restitution dudit flux d'origine à partir des seules données dudit flux principal modifié. Le flux principal modifié est alors appelé « flux sécurisé ». La « distribution sécurisée » est une distribution de flux sécurisés.

Dans la présente invention, on entend par le terme « embrouillage » la modification d'un flux binaire numérique selon des méthodes appropriées de manière à ce que ce flux reste conforme au standard selon lequel il a été généré, tout en rendant décodable et affichable sur un écran l'information visuelle codée par ce flux, mais altérée du point de vue de la perception visuelle humaine.

Dans la présente invention, on entend sous le terme « désembrouillage » le processus de restitution par des méthodes appropriées du flux binaire initial, le flux binaire restitué après le désembrouillage étant identique, donc sans perte, au flux binaire initial.

On définit la notion de « scalabilité granulaire » à partir de l'expression en anglais « granular scalability ». On définit la scalabilité comme la propriété qui caractérise un encodeur capable d'encoder ou un décodeur capable de décoder un ensemble ordonné de flux binaires de façon à produire ou reconstituer une séquence dite multi-couches. On définit la granularité comme la quantité d'informations susceptible d'être transmise par chaque couche d'un flux résultant d'un encodage par couches, le flux étant alors aussi qualifié de « granulaire ». On définit alors les scalabilités qualitative, spatiale et en résolution. Un flux possède une « scalabilité qualitative » s'il est organisé selon une structure ordonnée de sous-couches successives dont l'addition permet l'amélioration de la qualité visuelle de l'image.

Un flux possède une « scalabilité spatiale » s'il est organisé selon une structure ordonnée de blocs de données codant une information localement spatiale dans l'image.

Un flux possède une « scalabilité en résolution » s'il est organisé selon une structure ordonnée de blocs de données codant des informations permettant de décoder l'image à un niveau de résolution fixé.

On définit la scalabilité en résolution comme la possibilité de décoder l'image selon plusieurs niveaux de résolution à partir d'un unique flux binaire représentant l'image encodée par ondelettes.

Un flux possède une « scalabilité spectrale » s'il est organisé selon une structure ordonnée de blocs de données codant des informations permettant de décoder une image multi composantes selon une composante fixée.

La présente invention propose la protection de l'image numérique codée en ondelettes basée intégralement sur la structure du « flux de bits (bitstream) » (séquence binaire), protection qui consiste à modifier des parties ciblées du flux de bits (relatives à la modélisation par ondelettes) et ses caractéristiques. Certaines vraies valeurs sont extraites du flux de bits et sont stockées en tant qu'information complémentaire, et, à leurs places, sont mises des valeurs aléatoires ou calculées ou des valeurs permutées, et cela pour la totalité du flux numérique. Ainsi, l'embrouilleur rajoute des « leurres » pour le décodeur, qui reçoit en entrée un flux binaire complètement conforme au format numérique d'origine, mais à partir duquel l'image décodée et affichée n'est pas acceptable du point de vue de la perception visuelle humaine. Le module d'embrouillage effectue une analyse du flux de bits et sélectionne les endroits du flux de bits où il introduit des perturbations. Une perturbation est définie comme étant un changement (par exemple changement de la valeur, inversion du signe, saturation, seuillage), ou une substitution par une valeur aléatoire ou calculée, ou une permutation. Le procédé d'embrouillage - désembrouillage réalisé est sans perte de qualité pour l'image originale. Avantageusement, l'opération d'embrouillage est également réalisée avec un décodage - encodage partiel du flux de bits (bitstream) représentant l'image encodée.

Avantageusement, la présente invention permet la protection d'une image numérique codée en un flux présentant une propriété de scalabilité spatiale.

Avantageusement, la présente invention permet la protection d'une image numérique codée en un flux présentant une propriété de scalabilité en résolution.

Avantageusement, la présente invention permet la protection d'une image numérique codée en un flux présentant une propriété de scalabilité en qualité.

Avantageusement, la présente invention permet la protection d'une image numérique codée en un flux présentant une propriété de scalabilité spectrale.

Avantageusement, l'opération d'embrouillage est également réalisée avec un décodage préalable complet du flux de bits représentant l'image encodée puis un réencodage avant modification en un flux présentant des propriétés de scalabilité.

A l'inverse de la plupart des systèmes de cryptage déjà connus par l'homme de l'art, le principe décrit ci-dessous permet d'assurer un haut niveau de protection tout en réduisant le volume d'information nécessaire au décodage effectué de manière progressive et adaptative.

La protection, réalisée de façon conforme à l'invention, est basée sur le principe de suppression et/ou de remplacement des informations codant le signal visuel original par une méthode quelconque, soit : substitution, modification, permutation ou déplacement de l'information. Cette protection est également basée sur la connaissance de la structure du flux à la sortie de l'encodeur visuel : l'embrouillage dépend de la structure dudit flux numérique. La reconstitution du flux original s'effectue sur l'équipement destinataire à partir du flux principal modifié déjà présent ou disponible (par exemple sur un CD ou DVD) ou envoyé en temps réel sur l'équipement destinataire et de l'information complémentaire envoyée en temps réel au moment de la visualisation comprenant des données et des fonctions exécutées à l'aide de routines (ensemble d'instructions) numériques.

Connaissant la manière dont sont effectués la modélisation, la compression et l'encodage en ondelettes de l'image par le codeur en ondelettes et/ou le standard ou la norme donnés, il est toujours possible d'extraire à partir du flux de bits (bitstream) les paramètres principaux qui le décrivent et qui sont envoyés au décodeur.

Beaucoup de systèmes d'embrouillage ont un effet immédiat, c'est-à-dire que soit le flux initial est totalement embrouillé, soit le flux initial n'est pas du tout embrouillé, et de même pour les systèmes de désembrouillage du contenu visuel. Avec des systèmes rigides de ce type, il est difficile de satisfaire la gestion des droits des utilisateurs et la qualité de service des systèmes client-serveur multi-utilisateurs, multi-applications et multi-services c'est-à-dire adapter les services en fonction des différents profils des utilisateurs et de leurs droits.

On entend par « profil » de l'utilisateur, un fichier numérique comprenant des descripteurs et informations spécifiques à l'utilisateur, par exemple ses préférences culturelles et ses caractéristiques sociales et culturelles, ses habitudes d'utilisation telles que la périodicité de l'utilisation des moyens de visualisation, la durée moyenne de la visualisation des images fixes embrouillées et/ou désembrouillées, la fréquence de visualisation d'une séquence embrouillée et/ou désembrouillée, ou toute autre caractéristique comportementale au regard de l'exploitation d'images fixes et successions d'images fixes. Ce profil se formalise par un fichier numérique ou une table numérique exploitable par des moyens informatiques et se trouve dans le serveur et/ou le boîtier décodeur du client.

On entend par « profil matériel » de l'utilisateur, un fichier numérique comprenant des descripteurs et informations spécifiques au matériel de visualisation de l'utilisateur, par exemple la résolution de son écran de visualisation, la puissance de calcul du décodeur d'images fixes ou tout autre caractéristique physique au regard de l'exploitation d'images fixes ou succession d'images fixes. Ce profil se formalise par un fichier numérique ou une table numérique exploitable par des moyens informatiques et se trouve dans le serveur et/ou le boîtier décodeur du client.

La demande de brevet internationale WO-98/42098 décrit un procédé pour la distribution sécurisée d'images fixes numériques sous forme de flux comportant des séquences de données contenant chacune une partie de l'information de l'image.

Le procédé décrit dans ce document comporte une étape de modification du flux original par modification d'une partie au moins desdites séquences de données, ainsi qu'une étape de transmission du flux modifié et une étape de reconstruction à l'aide d'un décodeur sur l'équipement destinataire, tel que défini par le préambule de la revendication 1 ci-après.

Une étape subsidiaire de cryptage de données avant modification du flux est également réalisée dans le procédé décrit dans ce document.

La reconstruction de l'image se fait à l'aide d'un profil numérique établi pour un utilisateur, le profil étant utilisé pour crypter une clef de décryptage du contenu de l'information complémentaire, ce qui ne permet pas une reconstruction adaptative et progressive de l'image. Le profil numérique de l'utilisateur n'est ainsi utilisé que dans le cadre d'une mesure de sécurité cryptographique.

La demande PCT/FR2003/002915, publiée sous le numéro WO 2004/032478 appartient à l'état de la technique en vertu de l'article 54(3) CBE. Elle décrit un procédé pour la distribution sécurisée d'un flux vidéo avec désembrouillage adaptatif et progressif. Les codages décrits dans cette demande sont de type DCT, de sorte que les images du flux vidéo ne sont pas codées en ondelettes.

Le document WO 98/42098 décrit un procédé pour la distribution (par exemple d'images fixes) sous forme d'un flux principal modifié et d'un information complémentaire permettant la reconstruction.

La présente invention entend remédier aux inconvénients de l'art antérieur en proposant un système de désembrouillage adaptatif et progressif du contenu visualisé en fonction du profil et des droits des utilisateurs.

Dans la présente invention, on applique un désembrouillage adaptatif et progressif du contenu visualisé en fonction du profil et des droits de chaque utilisateur. Le serveur envoie uniquement les parties de ladite information complémentaire, qui a une structure se caractérisant par une « scalabilité granulaire » pour fournir à l'utilisateur un contenu plus ou moins embrouillé en fonction de certains critères, profils et droits. Les flux numériques encodés en ondelettes possèdent les propriétés de scalabilités granulaires spatiale, qualitative et en résolution.

La granularité de ladite information complémentaire est relative au degré de l'embrouillage. Par exemple, les images fixes sont complètement embrouillées, une seule fois pour tous les utilisateurs. Ensuite, le serveur envoie tout ou partie de ladite information complémentaire, de manière à ce que l'image ou la succession d'images fixes apparaisse plus ou moins embrouillée à l'utilisateur. Le contenu envoyé de ladite information complémentaire et le contenu visualisé sur l'écran de visualisation de l'utilisateur sont fonction de chaque client et le serveur gère et effectue l'envoi en temps réel au moment de la visualisation par chaque utilisateur.

Dans son acception la plus générale, la présente invention se rapporte à un procédé tel que défini par la revendication 1.

Avantageusement, ladite modification produit un flux principal modifié et une information complémentaire permettant la reconstruction du flux original par un décodeur, le procédé comportant une étape de transmission du flux modifié, et comportant en outre une étape de transmission à l'équipement destinataire d'un sous-ensemble de ladite information complémentaire de modification, ledit sous-ensemble étant déterminé en fonction d'informations provenant d'un profil matériel du destinataire.

De plus, ledit flux original est codé selon un procédé de codage en ondelettes.

Avantageusement, ledit flux original possède une propriété de scalabilité en résolution.

Avantageusement, ledit flux original possède une propriété de scalabilité spatiale.

Avantageusement, ledit flux original possède une propriété de scalabilité qualitative.

Avantageusement, ledit flux original possède une propriété de scalabilité spectrale.

Dans une variante, le flux principal modifié est disponible sur l'équipement destinataire préalablement à la transmission de l'information complémentaire sur l'équipement destinataire.

Selon une variante, une partie du flux principal modifié est disponible sur l'équipement destinataire préalablement à la transmission de l'information complémentaire sur l'équipement destinataire.

Dans une autre variante, le flux principal modifié et l'information complémentaire sont transmis ensemble en temps réel.

Avantageusement, la détermination dudit sous-ensemble de ladite information complémentaire est basée sur les propriétés de scalabilité dudit flux original.

Avantageusement, la détermination dudit sous-ensemble de ladite information complémentaire est basée sur les propriétés de scalabilité granulaire de ladite information complémentaire.

De plus, la quantité d'informations contenues dans le ledit sous-ensemble correspond à un niveau de scalabilité déterminé en fonction du profil du destinataire.

Avantageusement, le type d'informations contenues dans ledit sous-ensemble correspond à un niveau de scalabilité déterminé en fonction du profil du destinataire.

Avantageusement, ladite information complémentaire comprend au moins une routine numérique apte à exécuter une fonction.

Avantageusement, lesdites fonctions transmises à chaque destinataire sont personnalisées pour chaque destinataire en fonction de la session.

Selon une variante, ladite information complémentaire est cryptée préalablement pour chaque destinataire en fonction de la session.

Selon une variante, ladite information complémentaire est subdivisée en au moins deux sous-parties.

Selon un mode de réalisation, lesdites sous-parties de l'information complémentaire sont distribuées par différents médias.

Selon un autre mode de réalisation, lesdites sous-parties de l'information complémentaire sont distribuées par le même média.

Dans une variante, tout ou partie de l'information complémentaire est transmise sur un vecteur physique.

Dans une autre variante, l'information complémentaire est transmise en ligne.

Avantageusement, le type d'informations contenues dans ledit sous-ensemble est mis à jour en fonction du comportement dudit destinataire pendant la connexion au serveur, ou en fonction de ses habitudes ou en fonction de données communiquées par un tiers.

Avantageusement, la quantité d'informations contenues dans ledit sous-ensemble est mise à jour en fonction du comportement dudit destinataire pendant la connexion au serveur, ou en fonction de ses habitudes ou en fonction de données communiquées par un tiers.

De plus, le procédé comporte une étape préalable de conversion analogique/numérique sous un format structuré, le procédé étant appliqué à un signal analogique.

Selon une variante, une étape préalable transcode le flux numérique à partir d'un format quelconque vers un format présentant des propriétés de scalabilité.

Avantageusement, lesdites images fixes constituent une succession d'images fixes dans le temps.

Selon un mode de mise en oeuvre, ladite modification desdites séquences de données est différente pour au moins deux images de ladite succession d'images.

Selon un autre mode de mise en oeuvre, ladite modification desdites séquences de données d'une image de ladite succession d'images inclut la modification desdites séquences de données des images précédentes dans l'ordre temporel de la succession en se fondant sur les propriétés de scalabilité spatiale et qualitative des transformations en ondelettes.

Avantageusement, la scalabilité granulaire de ladite information complémentaire constituée desdits sous-ensembles est fondée sur les scalabilités qualitative, spatiale et en résolution des flux issus d'une transformation en ondelettes des images.

De plus, le procédé est sans perte de qualité.

Selon une variante particulière de réalisation, l'invention s'applique aussi au traitement d'images fixe, par exemple d'images compressées selon la norme JPEG2000. Dans ce cas, elle concerne e un procédé pour la distribution sécurisée d'images fixes numériques prévoyant que lors de la reconstruction dudit flux original une trace indélébile et imperceptible est insérée dans ledit flux original, cette trace portant un identifiant non ambigu.

Selon une variante, une trace indélébile et imperceptible est insérée dans l'image après reconstruction et décodage dudit flux original, cette trace portant un identifiant non ambigu.

Selon un exemple de réalisation, ladite trace indélébile et imperceptible est détectable par un logiciel adéquat analysant le contenu reconstitué.

De préférence, ledit identifiant non ambigu authentifie l'utilisateur.

Selon une variante, ledit identifiant non ambigu authentifie l'équipement sur lequel l'algorithme de reconstruction du flux original a été exécuté.

Selon une autre variante, ledit identifiant non ambigu identifie la session ouverte par l'utilisateur au cours de laquelle la reconstitution du flux original est exécutée.

Avantageusement, la session d'embrouillage et la session de désembrouillage sont réalisées sous le contrôle d'un serveur sécurisé jouant le rôle de tiers de confiance.

Selon un mode de mise en oeuvre particulier, ladite session est identifiée par un serveur sécurisé, tenant à disposition un registre comportant pour chaque session des informations sur le numéro de la session, l'identifiant de l'utilisateur ou l'identifiant de l'équipement utilisateur, l'identifiant du contenu objet de la session et d'un groupe date - heure.

Selon un autre mode de mise en oeuvre, une signature numérique est calculée à partir du flux reconstitué, la trace insérée génère une signature unique et différente pour chaque flux reconstitué et cette signature est stockée sur un serveur sécurisé jouant le rôle de tiers de confiance.

De préférence, le flux reconstitué par le désembrouillage a la même qualité visuelle que le flux original et existe sous forme exploitable uniquement s'il porte ladite trace.

Avantageusement, le flux reconstitué par le désembrouillage existe sous forme exploitable uniquement si la signature numérique extraite lors d'une étape de contrôle d'authenticité est identique avec la signature stockée sur le serveur sécurisé jouant le rôle de tiers de confiance.

Avantageusement, l'invention est appliquée à un flux numérique audiovisuel issu d'une norme ou standard propriétaire.

L'invention concerne également un système pour la distribution sécurisée d'images fixes numériques comportant un serveur comprenant des moyens pour diffuser un flux modifié, et une pluralité d'équipements munis d'un circuit de désembrouillage, le serveur comprenant en outre un moyen d'enregistrement du profil numérique de chaque destinataire et un moyen d'analyse du profil de chacun des destinataires d'un flux modifié, ledit moyen commandant la nature de l'information complémentaire transmise à chacun desdits destinataires.

L'invention concerne enfin un système pour la distribution sécurisée d'images fixes numériques le niveau (qualité, quantité, type) de l'information complémentaire étant déterminé pour chaque destinataire en fonction de l'état de son profil au moment de la visualisation du flux principal.

On comprendra mieux l'invention à l'aide de la description, faite ci-après à titre purement explicatif, d'un mode de réalisation de l'invention, en référence à la figure annexée :

-       la figure illustre un mode de réalisation particulier du système client-serveur conforme à l'invention.

Les images numériques sont obtenues à l'aide de technologies de compression se basant sur les ondelettes (par exemple les images fixes dans la norme JPEG-2000, MPEG-4, JJ2000, JASPER, Kakadu, Moving JPEG-2000), le concept des ondelettes est un schéma itératif c'est-à-dire la répétition d'une même opération de filtrage à des résolutions de plus en plus faibles, et qui génère des flux se caractérisant par une scalabilité spatiale, qualitative et en résolution. Le flux d'origine est reconstitué sur l'équipement destinataire à partir du flux principal modifié et de l'information complémentaire. L'information complémentaire est divisée en sous-ensembles, et en fonction du profil de l'utilisateur, un sous-ensemble, plusieurs sous-ensembles ou l'intégralité de l'information complémentaire sont envoyés pour le désembrouillage partiel ou total des images.

Avantageusement, l'information complémentaire envoyée à l'utilisateur est encryptée préalablement à son envoi à l'aide d'une clé spécifique pour chaque utilisateur.

On définit comme quantité d'informations contenues dans ledit sous-ensemble le nombre de données et/ou des fonctions appartenant à l'information complémentaire envoyée au destinataire pendant la connexion.

Le type d'informations contenues dans le ledit sous-ensemble, correspond à un niveau de scalabilité spatiale, qualitative et en résolution déterminé en fonction du profil du destinataire. On définit comme « type » la nature des données et/ou fonctions appartenant à l'information complémentaire envoyée au destinataire pendant la connexion au serveur. Par exemple, le type de données est relatif aux habitudes du destinataire (abonnement complet, abonnement partiel, paiement à la carte, heure de connexion, durée de la connexion, régularité de la connexion et des paiements), de son environnement (habite une grande ville, le temps qu'il fait en ce moment) et à ses caractéristiques (âge, sexe, religion, communauté).

Avantageusement, l'information complémentaire est constituée d'une succession de sous-ensembles correspondant chacun à un niveau de scalabilité défini dans le flux original.

Ladite information complémentaire est composée d'au moins une fonction, et les fonctions sont personnalisées pour chaque destinataire par rapport à la session de connexion. On définit une session à partir de l'heure de connexion, la durée, le type dudit premier flux visualisé et les éléments connectés (destinataires, serveurs).

Ladite information complémentaire est subdivisée en au moins deux sous-parties, chacune des sous-parties pouvant être distribuée par différents médias, ou par le même média. Par exemple, dans le cas de distribution de l'information complémentaire par plusieurs médias, on peut assurer une gestion plus complexe des droits des destinataires.

Plusieurs exemples de réalisation sont décrits ci-après.

La transformée en ondelettes d'une image (signal spatial à deux dimensions) consiste à appliquer sur l'image originale une succession de filtres passe-haut et passe-bas élaborés à partir des caractéristiques des ondelettes d'analyse. L'opération de synthèse, qui consiste à reconstruire l'image à partir de l'ensemble ou d'un sous-ensemble des coefficients ondelettes générés par la transformée, obéit à un schéma de filtrage inverse.

L'application d'une étape de transformée en ondelettes sur une image numérique (pouvant être composée d'une ou plusieurs matrices de valeurs réelles ou entières) est équivalente à une opération de filtrage sur les lignes et les colonnes de ou des matrices de valeurs, suivie d'une diminution dyadique (division par deux) de la taille. Elle génère donc à chaque étape 4 nouvelles matrices de coefficients ondelettes, appelées sous-bandes et dont la largeur et la hauteur sont égales à la moitié de la largeur et la hauteur de la matrice transformée (progression dyadique). Soit une image I de largeur L et de hauteur H et de résolution R. L'application d'une étape de la transformée en ondelettes génère donc 4 matrices de coefficients ondelettes de dimension (L/2,H/2) : la sous-bande $LL_{R-1}$, résultat d'un filtrage passe bas horizontal (lignes) et vertical (colonnes) sur l'image I, la sous-bande $LH_{R-1}$, résultat d'un filtrage passe-bas horizontal et passe-haut vertical, la sous-bande $HL_{R-1}$, résultat d'un filtrage passe-haut horizontal et passe-bas vertical et la sous-bande $HH_{R-1}$, résultat d'un filtrage passe-haut horizontal et vertical.

On considère la transformée en ondelettes à R niveaux (équivalente à R étapes) d'une image. Une transformée en ondelettes à R niveaux est associée avec R+1 niveaux de résolution, numérotés de R à 0, avec R et 0 correspondant respectivement aux niveaux de résolution le plus fin (image initiale) et le plus grossier (image approchée). Chaque sous-bande issue de la décomposition en ondelettes de l'image I est identifiée par son orientation (LL ou HL ou LH ou HH) et son niveau de résolution correspondant (compris entre 0 et R-1).

L'image originale peut être considérée comme la bande $LL_R$. A chaque niveau i de la décomposition en ondelettes (excepté le dernier i=0), la sous-bande $LL_i$ est ainsi décomposée en 4 nouvelles sous-bandes $LL_{i-1}$, $HL_{i-1}$, $LH_{i-1}$ et $HH_{i-1}$ et dont la taille est divisée par deux par rapport à $LL_i$. Le processus est itéré jusqu'à ce que la sous-bande $LL_0$ ait été obtenue. Ainsi, pour une transformée en ondelettes à R niveaux, 3R+1 sous-bandes de coefficients ondelettes sont générées : $LL_0$, $HL_0$, $LH_0$, $HH_0$, $HL_1$, $LH_1$, $HH_1$, ..., $HL_{R-1}$, $LH_{R-1}$, $HH_{R-1}$.

La reconstruction de l'image (synthèse) à partir des 3R+1 sous-bandes de coefficients consiste à appliquer une opération de filtrage inverse sur ces coefficients ondelettes suivie d'une augmentation dyadique de la taille. Une reconstruction progressive de l'image selon différents niveaux de résolution peut ainsi être opérée. Par exemple, en ajoutant dans l'opération de synthèse à l'image reconstruite de résolution r-1 les 3 sous-bandes de coefficients ondelettes $HL_{r-1}$, $LH_{r-1}$, $HH_{r-1}$ une nouvelle image de résolution r est obtenue.

L'unique sous-bande de coefficients ondelettes $LL_0$ est une approximation de l'image originale $LL_R$ dont la résolution est $2^R$ fois inférieure à l'image originale.

Les 3R sous-bandes de coefficients ondelettes $HL_{r-1}$, $LH_{r-1}$, $HH_{r-1}$ ($r \in [1,R]$) correspondent quant à elles à des détails dans l'image, extraits au niveau de résolution r-1. Plus r est grand, plus les coefficients ondelettes de ces sous-bandes sont caractéristiques de détails de plus en plus fins (petits) dans l'image originale.

Les coefficients ondelettes issus de la transformée en ondelettes d'une image sont les caractéristiques spatialement locales d'une information fréquentielle. Plus r diminue, plus la zone spatiale caractérisée par un seul coefficient ondelette augmente (multiplication par un facteur 4 à chaque étape).

Une transformée en ondelettes à R niveaux d'une image génère une « image » dite d'approximation, de résolution $2^R$ inférieure et 3R « images » dites de détails à différentes résolutions (0 à R).

Par conséquent, un flux binaire offrant une scalabilité granulaire peut être représenté sous la forme suivante : $\{B_0, B_1, ..., B_{Ntot}\}$. Chaque $B_i$ représente un sous-ensemble de bits, le flux binaire pouvant alors être décrit comme une suite de sous-ensembles $B_i$ de symboles binaires. Ainsi, un flux binaire issu d'un codage en ondelettes présente la propriété de « scalabilité granulaire qualitative » si et seulement si :

- Le décodage de n (n < Ntot où le flux binaire est décrit comme une suite de Ntot sous-ensembles Bi) sous-ensembles de bits $B_0$, $B_1$, ..., Bn implique une image décodée $I_d$ de qualité $Q_n$, la qualité étant mesurée par rapport à l'image originale I selon une métrique M prédéfinie calculée à partir d'éléments subjectifs et/ou objectifs, c'est-à-dire $Q_n=M(I_d(n),I)$.
- Lorsque m (m < n) sous-ensembles $B_i$ sont décodés, $\{B_0, B_1, ..., B_m\}$, alors $Q_m < Q_n$.
- Lorsque p (p > n, p < N) sous-ensembles $B_i$ sont décodés, $\{B_0, B_1, ...,B_m,...,B_n,..., B_p\}$, alors $Q_n < Q_p$.
- Lorsque les Ntot sous-ensembles $B_i$ sont décodés, $Q_{Ntot}$ est maximum et $Q_{Ntot} \geq Q_i$ pour $0 < i \leq$ Ntot.

De même, un flux binaire issu d'un codage en ondelettes présente la propriété de « scalabilité en résolution » si et seulement si :

- Le décodage de n (n < Ntot) sous-ensembles de bits $\{B_0, B_1, ..., B_n\}$ implique une image $I_d$ de résolution $R_n$,
- Lorsque m (m < n) sous-ensembles $B_i$ sont décodés, $\{B_0, B_1, ..., B_m\}$, alors $R_m < R_n$.
- Lorsque p (p > n, p < Ntot) sous-ensembles $B_i$ sont décodés, $\{B_0, B_1, ...,B_m,...,B_n,..., B_p\}$, alors $R_n < R_p$.
- Lorsque les Ntot sous-ensembles $B_i$ sont décodés, $R_{Ntot}$ est maximum et $R_{Ntot} \geq R_i$ pour $0 < i \leq$ Ntot.

Par exemple, une image a été embrouillée en modifiant (modification de type ajout/substitution de bruit, seuillage, permutation) un sous-ensemble comptant N coefficients ondelettes relatifs à une ou plusieurs composantes spectrales de l'image et/ou appartenant à une ou plusieurs régions d'intérêt dans l'image originale ou à la totalité de l'image et/ou relatifs à différents niveaux de résolution dans la décomposition ondelettes (de 0 à R-1) et/ou appartenant à une ou plusieurs sous-bandes (parmi LL, HL, LH et HH).

Le désembrouillage adaptatif et progressif de l'image consiste à désembrouiller progressivement l'image en plusieurs étapes : on remplace d'abord $n_0$ ($0 < n_0 <$ Ntot) coefficients ondelettes modifiés par leurs valeurs originales, puis $n_1$ ($0 < n_1 <$ Ntot) et ainsi de suite jusqu'à $n_P$ ($0 < n_P <$ Ntot) tel que :

$$n_0 + n_1 + \ldots + n_P = \text{Ntot.}$$

En fonction de la méthode d'embrouillage utilisée et du profil du client, le désembrouillage est adapté au comportement du client lors de la connexion au serveur.

Décrivons un exemple de désembrouillage progressif. Dans cet exemple, les Ntot coefficients ondelettes modifiés appartiennent aux sous-bandes HL, LH et HH correspondant à 4 différents niveaux de résolution (i.e r, r+1, r+2, r+3). Il consiste à remplacer d'abord les $n_0$ coefficients ondelettes appartenant aux sous-bandes $HL_r$, $LH_r$ et $HH_r$, puis les $n_1$ coefficients ondelettes appartenant aux sous-bandes $HL_{r+1}$, $LH_{r+1}$ et $HH_{r+1}$, puis les $n_2$ coefficients ondelettes appartenant aux sous-bandes $HL_{r+2}$, $LH_{r+2}$ et $HH_{r+2}$ et finalement les $n_3$ coefficients appartenant aux sous-bandes $HL_{r+3}$, $LH_{r+3}$ et $HH_{r+3}$. La première étape de désembrouillage (remplacement des $n_0$ coefficients) atténue en résolution et en étendue les effets de l'embrouillage initial (suppression de l'embrouillage des détails de résolution r) mais les détails appartenant à des niveaux de résolution supérieurs (r+1, r+2 et r+3) sont toujours dégradés. Les étapes suivantes atténuent de plus en plus l'embrouillage pour finalement atteindre un désembrouillage complet. Cet exemple est purement illustratif et ne doit pas être considéré comme limitatif. Le nombre de niveaux de résolution affectés par l'embrouillage initial peut être compris entre 1 et R+1. En fonction de ce nombre, le nombre maximal d'étapes de désembrouillage peut donc être compris entre 1 et R+1.

Une autre variante est d'envoyer $n_i$ coefficients appartenant aux sous-bandes $HL_{r+i}$, $LH_{r+i}$ et $HH_{r+i}$ en plusieurs sous étapes, augmentant ainsi le nombre d'étapes de désembrouillage progressif.

Un autre moyen de désembrouillage progressif consiste à restituer les coefficients ondelettes originaux relatifs à une des C composantes spectrales de l'image, puis à deux des C composantes et ainsi de suite jusqu'à la restitution complète des coefficients ondelettes originaux relatifs aux C composantes. On peut alors parler de désembrouillage spectral progressif. En fonction du nombre de composantes initialement embrouillées (entre 1 et C), le nombre d'étapes de désembrouillage varie aussi entre 1 et C.

Le désembrouillage progressif d'une image embrouillée consiste à restituer les coefficients ondelettes originaux appartenant à une zone spatiale prédéfinie dans l'image tout en maintenant un embrouillage total du reste de l'image. Soit (L,H) la dimension de l'image originale et (l,h) la dimension de la zone d'intérêt que l'on souhaite désembrouiller sur l'image originale. Dans cet exemple, nous supposons que cette zone est située au centre de l'image, mais cette zone peut être définie n'importe où dans l'image originale.

Soit r le niveau de résolution de la sous-bande de coefficients ondelettes qu'il faut restituer. Alors les formules suivantes indiquent les intervalles [is,js] et [ie,je] des indices des coefficients ondelettes à restituer dans la sous-bande de résolution r considérée :

$$is = nlr / 2 - ( l / 2^{r+1}), \quad js = ncr / 2 - ( h / 2^{r+1}),$$

$$ie = nlr / 2 + ( l / 2^{r+1}), \quad je = ncr / 2 + (h / 2^{r+1}),$$

où (nlr, ncr) sont respectivement le nombre de lignes et de colonnes de la matrice des coefficients ondelettes dans la sous-bande considérée. Le désembrouillage progressif de la zone d'intérêt est réalisé en restituant successivement les coefficients ondelettes originaux de chaque sous-bande pour chaque résolution : par exemple $LL_0$, puis $HL_1$, $LH_1$, $HH_1$, puis $HL_2$, $LH_2$, $HH_2$, et ainsi de suite jusqu'à $HL_{R-1}$ $LH_{R-1}$, $HH_{R-1}$.

Selon un autre mode de réalisation, le désembrouillage progressif consiste à restituer premièrement les coefficients ondelettes originaux appartenant à la sous-bande LL, puis les coefficients ondelettes originaux appartenant à toutes les sous-bandes LH, puis les coefficients ondelettes originaux appartenant à toutes les sous-bandes HL et finalement les coefficients ondelettes originaux appartenant à toutes les sous-bandes HH. Ainsi, l'embrouillage des détails est progressivement atténué selon leurs orientations. Avantageusement, l'ordre des types de sous-bandes pour lesquelles les coefficients ondelettes sont restitués peut être modifié.

L'invention sera mieux comprise à la lecture d'un exemple de réalisation concernant un flux au format JPEG-2000. Dans cet exemple, l'invention consiste à modifier la valeur de certains champs, notamment les informations nécessaires à un décodeur pour la reconstitution du flux original.

Sur le dessin en annexe, la figure représente un mode de réalisation préféré particulier du système client-serveur conforme à l'invention.

Le flux d'origine (11) peut être directement sous forme numérique (111) ou sous forme analogique (101). Dans ce dernier cas, le flux analogique (11) est converti par un codeur non représenté en un flux numérique (111). Dans la suite du texte, nous noterons (1) le flux numérique d'entrée correspondant à l'image fixe. Le flux JPEG-2000 que l'on souhaite sécuriser (1) est envoyé à un système d'analyse et d'embrouillage (121) qui génère un flux principal modifié (122) au même format JPEG-2000, format identique au flux d'entrée (1) en dehors de ce que les valeurs de certains éléments du flux ont été remplacées par des valeurs différentes de celles d'origine, et est placé dans une mémoire tampon de sortie. L'information complémentaire (123), de format quelconque et organisée en couches de scalabilité granulaire, contient des informations relatives aux éléments des images qui ont été modifiés, remplacés, substitués ou déplacés, ainsi que leur valeur ou emplacement dans le flux original et possède plusieurs sous-ensembles, relatifs à sa propriété de scalabilité granulaire.

Le flux au format JPEG-2000 (122) est transmis, via un réseau de télécommunication (4) de type hertzien, câble, satellite, etc., au terminal (8) de l'utilisateur, et plus précisément dans sa mémoire ou sur son disque dur (85). Lorsque l'utilisateur désire afficher des images fixes présentes dans son terminal, le terminal (8) fait la demande d'affichage des images fixes présentes dans sa mémoire ou sur son disque dur (85). Le serveur (12) vérifie les droits de cet utilisateur pour cette demande. Pour cela, le serveur peut utiliser les données de cet utilisateur contenues dans une base de données reliée au serveur (12) et/ou utiliser un système à base de carte à puce (82) lié au système de synthèse (87).Deux éventualités sont alors possibles.

Si l'utilisateur ne possède pas tous les droits nécessaires pour voir l'image, dans ce cas, le flux JPEG-2000 (122) généré par le système d'embrouillage (121) présent dans la mémoire ou sur le disque dur (85) est envoyé au système de synthèse (87), via une mémoire tampon de lecture (83). Le système de synthèse (87) ne le modifie pas et le transmet à l'identique à un lecteur JPEG-2000 classique (81) et son contenu, dégradé visuellement par le système d'embrouillage (121), est affiché sur l'écran de visualisation (6). L'utilisateur du terminal (8) voit donc une image embrouillée.

Alternativement, l'utilisateur possède les droits pour regarder l'image. Dans ce cas, le système de synthèse adresse une demande de visionnage au serveur (12) contenant l'information nécessaire (123) à la récupération de l'image originale (101). Le serveur (12) envoie alors via des réseaux de télécommunication type ligne téléphonique analogique ou numérique, DSL (Digital Subscriber Line) ou BLR (Boucle Locale Radio), via des réseaux DAB (Digital Audio Broadcasting) ou via des réseaux de télécommunications mobiles numériques (GSM, GPRS, UMTS) (5) au moins un sous-ensemble de l'information complémentaire (123) permettant la reconstitution de l'image au terminal (8), qui stocke ledit sous-ensemble dans une mémoire tampon (86). Le système de synthèse (87) procède alors à la restauration, dans le flux JPEG-2000 embrouillé qu'il lit dans la mémoire tampon de lecture (83), des champs modifiés dont il connaît les positions ainsi que les valeurs d'origine grâce au contenu de l'information complémentaire lue dans la mémoire tampon (86) de désembrouillage de l'image. La quantité d'informations contenue dans l'information complémentaire (123) et qui est envoyée au système de désembrouillage est spécifique, adaptative et progressive pour chaque utilisateur et dépend de ses droits, par exemple utilisation unique ou multiple, droit de faire une ou plusieurs copies privées, retard ou anticipation de paiement. Pour déterminer la quantité d'information de l'information complémentaire (123) à envoyer au terminal (8), le serveur (12) consulte préalablement les droits de l'utilisateur.

Selon un mode de réalisation, un désembrouillage progressif d'une image pour laquelle les Ntot coefficients ondelettes modifiés appartiennent aux sous-bandes HL, LH et HH correspondant à 4 différentes niveaux de résolution (c'est-à-dire r, r+1, r+2, r+3) consiste à remplacer d'abord les $n_0$ coefficients ondelettes appartenant aux sous-bandes $HL_r$, $LH_r$ et $HH_r$, puis les $n_1$ coefficients ondelettes appartenant aux sous-bandes $HL_{r+1}$, $LH_{r+1}$ et $HH_{r+1}$, puis les $n_2$ coefficients ondelettes appartenant aux sous-bandes $HL_{r+2}$, $LH_{r+2}$ et $HH_{r+2}$ et finalement les $n_3$ coefficients appartenant aux sous-bandes $HL_{r+3}$, $LH_{r+3}$ et $HH_{r+3}$. La première étape de désembrouillage (remplacement des $n_0$ coefficients) atténue en résolution et en étendue les effets de l'embrouillage initial (suppression de l'embrouillage des détails de résolution r) mais les détails appartenant à des niveaux de résolution supérieurs (r+1, r+2 et r+3) sont toujours dégradés. Les étapes suivantes atténuent de plus en plus l'embrouillage pour finalement atteindre un désembrouillage complet. En fonction du nombre de niveaux de résolution R choisi pour embrouiller le flux, le nombre de niveaux de résolution affectés par l'embrouillage initial est compris entre 1 et R+1. En fonction de ce nombre, le nombre d'étapes de désembrouillage est donc compris entre 1 et R+1Dans cet exemple de réalisation, l'envoi d'un sous-ensemble de l'information complémentaire contenant les $n_0$ coefficients s'effectue quand l'utilisateur se connecte, sélectionne et télécharge l'image qu'il souhaite. L'image sélectionnée est alors affichée sur son écran partiellement désembrouillée, car elle est calculée qu'à partir des $n_0$ coefficients transmis au terminal de l'utilisateur. Si l'utilisateur décide de voir l'image selon une résolution supérieure, le serveur propose à l'utilisateur de payer une somme prédéterminée. Si l'utilisateur paye immédiatement par un moyen classique de paiement à distance (carte bancaire...), le serveur envoie un deuxième sous-ensemble de l'information complémentaire contenant les $n_1$ coefficients. Pendant la transaction de paiement, sont envoyés les sous-ensembles de l'information complémentaire concernant les étapes suivantes de désembrouillage et atténuent de plus en plus l'embrouillage pour finalement atteindre un désembrouillage complet, l'image affichée étant identique à l'image originale. Si le client n'accepte pas de payer immédiatement, les coefficients seront envoyés progressivement en fonction de l'arrivée du paiement. A chaque transaction, le serveur enregistre les comportements de l'utilisateur et réactualise le profil de celui-ci dans une base de données en fonction desdits comportements.

Le contenu envoyé de ladite information complémentaire (123) et le contenu visualisé sur l'écran de visualisation du client sont fonction de chaque client et le serveur gère et effectue l'envoi en temps réel desdits sous-ensembles au moment de la visualisation pour chaque utilisateur, par exemple en fonction du prix que le client est prêt à payer. Considérons que l'on a des images fixes stockées sur le serveur avec 10 résolutions différentes de R=1 à R=10, R = 10 étant la résolution maximale. Si un client est habitué à commander des images de résolution moyenne, son abonnement correspond au désembrouillage obtenu avec R = 5. S'il souhaite obtenir une résolution supérieure, donc par exemple un désembrouillage pour R = 7, il doit changer de type de paiement ou d'abonnement. Il peut ensuite, s'il le souhaite, et moyennant par exemple un nouveau paiement, obtenir la résolution R=8, puis R=9 et enfin R=10. Toutes ces opérations sont gérées par le serveur (12) en fonction du comportement de chaque utilisateur et grâce à l'utilisation d'une base de données reliée au serveur (12).

De même, un autre client ayant besoin d'images de haute résolution prend l'abonnement correspondant à la résolution maximale pour R = 10. Si ledit client a un retard de paiement, le serveur lui envoie automatiquement des images désembrouillées pour R = 6 par exemple, pour lui rappeler de régulariser son paiement.

Comme on vient de le décrire, le niveau (qualité, quantité, type) de l'information complémentaire est déterminé en fonction de chaque destinataire, en fonction de l'état de son profil au moment de la transmission du flux principal et une partie au moins dudit profil est stockée sur un équipement destinataire. Par exemple, sur le dessin en annexe, une partie du profil de l'utilisateur est enregistrée sur la carte à puce (82) liée au système de synthèse (87), comme par exemple les données numériques concernant la fréquence des connexions ou la régularité des paiements. Ces mêmes données et/ou le reste du profil peuvent ou peut se trouver sur le serveur (12). Le reste du profil peut contenir par exemple le type d'images que l'utilisateur préfère.

Dans une variante de réalisation, le profil du destinataire est mis à jour. La mise à jour dépend également du temps de connexion au serveur (donnée relative au comportement), à savoir si le client se connecte régulièrement (référant à ses habitudes). De même, le profil du destinataire peut être mis à jour en fonction de données récupérées auprès d'une base de données consommateurs déjà existante sur un serveur et relatives à ce client.

Selon un autre exemple de réalisation, le serveur transmet tout ou partie de l'information complémentaire à l'utilisateur pendant quelques secondes de l'affichage de l'image, puis, au fil du temps, transmet de moins en moins de sous-ensembles de l'information complémentaire. Ainsi, le désembrouillage de l'image est de moins en moins complet, donnant ainsi l'effet à l'utilisateur que l'image affichée sur son écran devient de moins en moins compréhensible, donc de plus en plus embrouillée. Cette fonctionnalité incite l'utilisateur à acheter les droits de voir l'image complètement désembrouillée, étant donné qu'il a vu partiellement le contenu.

Selon un autre mode de réalisation, tout ou partie de l'information complémentaire (123) est transmise à l'utilisateur sur un vecteur physique comme une carte à mémoire ou une carte à puce (82).

Selon un autre mode de réalisation, une partie seulement du flux principal modifié est disponible sur l'équipement destinataire : si les caractéristiques de l'écran de visualisation (6) ne permettent d'afficher qu'un nombre restreint de résolutions (R=1 à R=5), l'utilisateur n'a besoin de récupérer qu'une partie du flux principal modifié (122). En fonction du profil et des droits de l'utilisateur, une partie de l'information complémentaire lui permettant de visualiser l'image seulement aux résolutions R=1 à R=5 sera envoyée par le serveur (12) au terminal utilisateur (8).

L'exemple décrit ci-dessous représente un autre mode de réalisation préféré du désembrouillage progressif et adaptatif pour des images numériques issues de la norme JPEG-2000.

Le module d'analyse et d'embrouillage (121) génère l'information complémentaire (123) et l'envoie à l'équipement destinataire via le réseau (5). Avantageusement, le réseau (5) comporte un serveur sécurisé sur lequel est stockée l'information complémentaire (123). Le module (121) génère également le flux principal modifié (122) au format JPEG-2000 qui est transmis sur le disque dur (85) de l'équipement destinataire du client par le réseau (4). Avantageusement, le réseau (4) comporte un serveur multimédia sur lequel est stocké le flux principal modifié (122). Le module d'embrouillage (121) insère également dans les méta données du flux principal modifié l'identifiant de l'information complémentaire correspondant audit flux principal modifié et l'adresse physique du serveur sécurisé (5) sur lequel est stockée ladite information complémentaire.

L'information complémentaire se caractérise par la présence desdits sous-ensembles correspondant à plusieurs couches de scalabilité, par exemple au nombre de quatre. Le premier sous-ensemble contient l'intégralité de l'information complémentaire, relative à la haute qualité de l'image d'origine. Le deuxième sous-ensemble contient une partie de l'information complémentaire relative à une qualité acceptable. Le troisième sous-ensemble contient une partie de l'information complémentaire, relative à une faible qualité, l'image restant encore visible, mais inexploitable. Le quatrième sous-ensemble contient juste la partie de l'information complémentaire correspondant à une qualité minimale, l'image est peu visible.

Lors de la reconstitution du flux original, le module de désembrouillage (87) insère dans le flux reconstitué une trace indélébile et imperceptible par l'oeil humain, cette trace portant un identifiant non ambigu. La trace insérée dans le flux est détectable par un logiciel adéquat qui possède la capacité d'analyser le contenu reconstitué. L'insertion de ladite trace et le désembrouillage s'effectuent de façon séquentielle et progressive, de manière à ce que, un flux qui a été embrouillé par le système d'analyse et d'embrouillage (121) et ensuite désembrouillé par le module (8), existe sous forme exploitable uniquement s'il comporte ladite trace non ambiguë. Lors du désembrouillage et de l'insertion séquentielle de la trace, la reconstitution est faite de manière à ce que la trace est insérée progressivement durant le désembrouillage progressif. A la fin du désembrouillage, la protection est assurée par la trace qui est substituée à la protection obtenue par l'embrouillage.

Avantageusement, une trace indélébile et imperceptible par l'oeil humain est insérée dans l'image et après décodage du flux reconstitué.

Avantageusement, un flux protégé avec le module d'embrouillage (12) et désembrouillé avec cette variante du module de désembrouillage (87) est toujours porteur d'une protection : soit invisible, issue de l'insertion de la trace identificatrice, soit visible, issue du désembrouillage adaptatif et progressif.

Avantageusement, ledit identifiant non ambigu porté par la trace est relatif à l'identification de la session interactive ouverte par l'utilisateur. Le rôle dudit identifiant non ambigu est l'authentification de l'utilisateur, de l'équipement destinataire sur lequel l'image est reconstruite et/ou de la session ouverte par l'utilisateur.

Selon un mode de réalisation, lors de l'étape de désembrouillage, le flux est reconstitué et une trace indélébile et imperceptible est insérée. Une signature numérique du flux reconstitué est ensuite calculée, cette signature étant unique et différente pour chaque flux reconstitué grâce à l'insertion de la trace, et cette signature est stockée sur un serveur sécurisé jouant le rôle de tiers de confiance.

Avantageusement, le flux reconstitué existe sous forme exploitable uniquement si la signature extraite lors d'une étape de contrôle d'authenticité est identique à la signature stockée sur le serveur sécurisé lors de la reconstitution.

La session est caractérisée par un numéro attribué par le serveur sécurisé (5), qui joue le rôle de tiers de confiance entre l'utilisateur et l'adaptation des paramètres caractérisant le type de désembrouillage. Le serveur sécurisé (5) attribue un numéro spécifique à chaque session, qui est sauvegardé dans un registre. Les informations comprises dans le registre sont le numéro de la session, construit à partir de l'identifiant de l'utilisateur ou l'identifiant de son équipement (8), l'identifiant du contenu de l'image qui est objet de la session et d'un groupe date - heure au standard ISO.

L'identification du contenu de l'image est effectuée par le module de désembrouillage (87) qui récupère à partir des méta données du flux principal modifié l'identité de l'information complémentaire relative au flux principal modifié et l'adresse physique du réseau (5) où se situe le serveur sécurisé sur lequel est stocké ladite information complémentaire.

La reconstitution de l'image originale est effectuée en plusieurs étapes. Lors de l'établissement de la session, le module de désembrouillage (87) lit dans les métadonnées du flux principal modifié, l'identifiant de l'information complémentaire et l'URL du serveur sécurisé (5). Le serveur (5) envoie tout d'abord ledit quatrième sous-ensemble de l'information complémentaire qui produit une image de qualité minimale, l'image étant inexploitable et mal visible. Cette étape sert de confirmation de l'identité du serveur sécurisé (5). La deuxième étape consiste à envoyer au module de désembrouillage ledit troisième sous-ensemble de l'information complémentaire qui rend l'image visible, mais toujours inexploitable. Cette étape est nécessaire pour que le client décide s'il veut obtenir des droits pour exploiter l'image, en voyant un aperçu de son contenu. En fonction du souhait du client (8) d'obtenir une qualité de l'image acceptable ou maximale, lui est envoyé ledit deuxième sous ensemble (correspondant à une qualité acceptable) ou ledit premier sous-ensemble (correspondant à une qualité maximale) de l'information complémentaire, moyennant le payement qui correspond à la qualité requise. Indépendamment du sous-ensemble utilisé pour le désembrouillage, une trace non ambiguë est toujours présente dans le flux reconstitué. Ladite trace est destinée à la protection de la propriété intellectuelle, conformément au traité de l'OMPI (Organisation Mondiale de la Propriété Intellectuelle) de décembre 1996 stipulant que les données destinées à la protection de la propriété intellectuelle peuvent être des données numériques.

Les modes de réalisation décrits ci-dessus ont valeur d'exemples et ne constituent pas une limitation de la présente invention.

## Revendications

1. Procédé pour la distribution sécurisée d'images fixes numériques sous forme de flux comportant des séquences de données contenant chacune une partie de l'information de l'image, le procédé comportant :

   une étape de modification du flux original par modification d'une partie au moins desdites séquences de données, ainsi qu'
   une étape de transmission du flux modifié et
   une étape de reconstruction à l'aide d'un décodeur sur l'équipement destinataire,
   dans ce procédé
   les images fixes numériques sont codées en ondelettes, et
   ladite modification consiste à remplacer des valeurs extraites du flux par d'autres valeurs de manière à produire un flux principal modifié au même format nominal que le flux original et une information complémentaire permettant la reconstruction du flux original par un décodeur,
   le procédé comportant en outre
   une étape de transmission à l'équipement destinataire d'un sous-ensemble de ladite information complémentaire de modification, ledit sous-ensemble étant déterminé en fonction d'informations provenant d'un profil numérique du destinataire pour restituer des coefficients ondelettes originaux appartenant à une zone spatiale prédéfinie dans l'image tout en maintenant un embrouillage total du reste de l'image, ladite reconstruction étant adaptative et progressive en fonction desdites informations provenant dudit profil numérique de l'utilisateur destinataire.

2. Procédé pour la distribution sécurisée d'images fixes numériques selon la revendication 1 dans lequel ladite modification produit
   un flux principal modifié et
   une information complémentaire permettant la reconstruction du flux original par un décodeur,
   le procédé comportant
   une étape de transmission du flux modifié, et comportant en outre
   une étape de transmission à l'équipement destinataire d'un sous-ensemble de ladite information complémentaire de modification, ledit sous-ensemble étant déterminé en fonction d'informations provenant d'un profil matériel du destinataire.

3. Procédé pour la distribution sécurisée d'images fixes numériques selon la revendication 1 ou 2 **caractérisé en ce que** ledit flux original possède une propriété de scalabilité en résolution.

4. Procédé pour la distribution sécurisée d'images fixes numériques selon l'une des revendications 1 à 3, **caractérisé en ce que** ledit flux original possède une propriété de scalabilité spatiale.

**5.** Procédé pour la distribution sécurisée d'images fixes numériques selon l'une des revendications 1 à 4, **caractérisé en ce que** ledit flux original possède une propriété de scalabilité qualitative.

**6.** Procédé pour la distribution sécurisée d'images fixes numériques selon l'une des revendications 1 à 5, **caractérisé en ce que** ledit flux original possède une propriété de scalabilité spectrale.

**7.** Procédé pour la distribution sécurisée d'images fixes numériques selon l'une des revendications 1 à 6, **caractérisé en ce que** le flux principal modifié est disponible sur l'équipement destinataire préalablement à la transmission de l'information complémentaire sur l'équipement destinataire.

**8.** Procédé pour la distribution sécurisée d'images fixes numériques selon l'une des revendications 1 à 6, **caractérisé en ce qu'**une partie du flux principal modifié est disponible sur l'équipement destinataire préalablement à la transmission de l'information complémentaire sur l'équipement destinataire.

**9.** Procédé pour la distribution sécurisée d'images fixes numériques selon l'une des revendications 1 à 6, **caractérisé en ce que** le flux principal modifié et l'information complémentaire sont transmis ensemble en temps réel.

**10.** Procédé pour la distribution sécurisée d'images fixes numériques selon l'une au moins des revendications 1 à 9, **caractérisé en ce que** la détermination dudit sous-ensemble de ladite information complémentaire est basée sur les propriétés de scalabilité dudit flux original.

**11.** Procédé pour la distribution sécurisée d'images fixes numériques selon l'une au moins des revendications 1 à 10, **caractérisé en ce que** la détermination dudit sous-ensemble de ladite information complémentaire est basée sur les propriétés de scalabilité granulaire de ladite information complémentaire.

**12.** Procédé pour la distribution sécurisée d'images fixes numériques selon l'une au moins des revendications 1 à 11, **caractérisé en ce que** la quantité d'informations contenues dans ledit sous-ensemble correspond à un niveau de scalabilité déterminé en fonction du profil du destinataire.

**13.** Procédé pour la distribution sécurisée d'images fixes numériques selon l'une au moins des revendications 1 à 11, **caractérisé en ce que** le type d'informations contenues dans ledit sous-ensemble correspond à un niveau de scalabilité déterminé en fonction du profil du destinataire.

**14.** Procédé pour la distribution sécurisée d'images fixes numériques selon l'une quelconque des revendications 1 à 13, **caractérisé en ce que** ladite information complémentaire comprend au moins une routine numérique apte à exécuter une fonction.

**15.** Procédé pour la distribution sécurisée d'images fixes numériques selon la revendication 14, **caractérisé en ce que** lesdites fonctions transmises à chaque destinataire sont personnalisées pour chaque destinataire en fonction de la session.

**16.** Procédé pour la distribution sécurisée d'images fixes numériques selon l'une quelconque des revendications 1 à 15, **caractérisé en ce que** ladite information complémentaire est cryptée préalablement pour chaque destinataire en fonction de la session.

**17.** Procédé pour la distribution sécurisée d'images fixes numériques selon l'une quelconque des revendications 1 à 16, **caractérisé en ce que** ladite information complémentaire est subdivisée en au moins deux sous-parties.

**18.** Procédé pour la distribution sécurisée d'images fixes numériques selon la revendication 17, **caractérisé en ce que** lesdites sous-parties de l'information complémentaire sont distribuées par différents medias.

**19.** Procédé pour la distribution sécurisée d'images fixes numériques selon la revendication 17, **caractérisé en ce que** lesdites sous-parties de l'information complémentaire sont distribuées par le même media.

**20.** Procédé pour la distribution sécurisée d'images fixes numériques selon l'une au moins des revendications 1 à 19, **caractérisé en ce que** tout ou partie de l'information complémentaire est transmise sur un vecteur physique.

**21.** Procédé pour la distribution sécurisée d'images fixes numériques selon l'une au moins des revendications 1 à 19, **caractérisé en ce que** l'information complémentaire est transmise en ligne.

22. Procédé pour la distribution sécurisée d'images fixes numériques selon l'une quelconque des revendications 1 à 21, **caractérisé en ce que** le type d'informations contenues dans ledit sous-ensemble est mis à jour en fonction du comportement dudit destinataire pendant la connexion au serveur, ou en fonction de ses habitudes ou en fonction de données communiquées par un tiers.

23. Procédé pour la distribution sécurisée d'images fixes numériques selon l'une quelconque des revendications 1 à 22, **caractérisé en ce que** la quantité d'informations contenues dans ledit sous-ensemble est mise à jour en fonction du comportement dudit destinataire pendant la connexion au serveur, ou en fonction de ses habitudes ou en fonction de données communiquées par un tiers.

24. Procédé pour la distribution sécurisée d'images fixes numériques selon l'une quelconque des revendications précédentes, **caractérisé en ce qu'**il comporte une étape préalable de conversion analogique/numérique sous un format structuré, le procédé étant appliqué à un signal analogique.

25. Procédé pour la distribution sécurisée d'images fixes numériques selon l'une quelconque des revendications précédentes, **caractérisé en ce qu'**il comporte une étape préalable de transcodage d'un flux numérique à partir d'un format quelconque vers un format présentant des propriétés de scalabilité.

26. Procédé pour la distribution sécurisée d'images fixes numériques selon l'une au moins des revendications précédentes, **caractérisé en ce que** lesdites images fixes constituent une succession d'images fixes dans le temps.

27. Procédé pour la distribution sécurisée d'images fixes numériques selon la revendication 26, **caractérisé en ce que** ladite modification desdites séquences de données est différente pour au moins deux images de ladite succession d'images.

28. Procédé pour la distribution sécurisée d'images fixes numériques selon l'une des revendications 26 ou 27, **caractérisé en ce que** ladite modification desdites séquences de données d'une image de ladite succession d'images inclut la modification desdites séquences de données des images précédentes dans l'ordre temporel de la succession en se fondant sur les propriétés de scalabilité spatiale et qualitative des transformations en ondelettes.

29. Procédé pour la distribution sécurisée d'images fixes numériques selon l'une au moins des revendications précédentes, **caractérisé en ce que** la scalabilité granulaire de ladite information complémentaire constituée desdits sous-ensembles est fondée sur les scalabilités qualitative, spatiale et en résolution des flux issus d'une transformation en ondelettes des images.

30. Procédé pour la distribution sécurisée d'images fixes numériques selon l'une au moins des revendications précédentes, **caractérisé en ce qu'**il est sans perte de qualité.

31. Procédé pour la distribution sécurisée d'images fixes numériques selon l'une quelconque des revendications précédentes, **caractérisé en ce que** lors de la reconstruction dudit flux original une trace indélébile et imperceptible est insérée dans ledit flux original, cette trace portant un identifiant non ambigu.

32. Procédé pour la distribution sécurisée d'images fixes numériques selon l'une quelconque des revendications précédentes, **caractérisé en ce qu'**une trace indélébile et imperceptible est insérée dans l'image après reconstruction et décodage dudit flux original, cette trace portant un identifiant non ambigu.

33. Procédé pour la distribution sécurisée d'images fixes numériques selon l'une des revendications 31 à 32, **caractérisé en ce que** ladite trace indélébile et imperceptible est détectable par un logiciel adéquat analysant le contenu reconstitué.

34. Procédé pour la distribution sécurisée d'images fixes numériques selon l'une des revendications 31 à 33, **caractérisé en ce que** ledit identifiant non ambigu authentifie l'utilisateur.

35. Procédé pour la distribution sécurisée d'images fixes numériques selon l'une des revendications 31 à 33, **caractérisé en ce que** ledit identifiant non ambigu authentifie l'équipement sur lequel l'algorithme de reconstruction du flux original a été exécuté.

**36.** Procédé pour la distribution sécurisée d'images fixes numériques selon l'une des revendications 31 à 33, **caractérisé en ce que** ledit identifiant non ambigu identifie la session ouverte par l'utilisateur au cours de laquelle la reconstitution du flux original est exécutée.

**37.** Procédé pour la distribution sécurisée d'images fixes numériques selon la revendication 36, **caractérisé en ce que** la session d'embrouillage et la session de désembrouillage sont réalisées sous le contrôle d'un serveur sécurisé jouant le rôle de tiers de confiance.

**38.** Procédé pour la distribution sécurisée d'images fixes numériques selon la revendication 36, **caractérisé en ce que** ladite session est identifiée par un serveur sécurisé, tenant à disposition un registre comportant pour chaque session des informations sur le numéro de la session, l'identifiant de l'utilisateur ou l'identifiant de l'équipement utilisateur, l'identifiant du contenu objet de la session et d'un groupe date - heure.

**39.** Procédé pour la distribution sécurisée d'images fixes numériques selon les revendications 31 à 38, **caractérisé en ce qu'**une signature numérique est calculée à partir du flux reconstitué, ladite trace indélébile et imperceptible générant une signature unique et différente pour chaque flux reconstitué, cette signature étant stockée sur un serveur sécurisé jouant le rôle de tiers de confiance.

**40.** Procédé pour la distribution sécurisée d'images fixes numériques selon l'une des revendications de 31 à 39, **caractérisé en ce que** le flux reconstitué par le désembrouillage a la même qualité visuelle que le flux original et existe sous forme exploitable uniquement s'il porte ladite trace.

**41.** Procédé pour la distribution sécurisée d'images fixes numériques selon l'une des revendications de 31 à 40, **caractérisé en ce que** le flux reconstitué par le désembrouillage existe sous forme exploitable uniquement si la signature numérique extraite est identique avec la signature stockée sur le serveur sécurisé jouant le rôle de tiers de confiance.

**42.** Procédé pour la distribution sécurisée d'images fixes numériques selon les revendications de 31 à 41, **caractérisé en ce que** ledit procédé est appliqué à un flux numérique audiovisuel issu d'une norme ou standard propriétaire.

**Patentansprüche**

**1.** Verfahren zur gesicherten Verteilung von digitalen Standbildern in Flussform, umfassend Sequenzen von Daten, die jeweils einen Teil der Information des Bilds enthalten, wobei das Verfahren Folgendes beinhaltet:

einen Schritt der Änderung des ursprünglichen Flusses durch Änderung mindestens eines Teils der Datensequenzen umfasst, sowie
einen Schritt der Übertragung des geänderten Flusses und
einen Schritt der Rekonstruktion mit Hilfe eines Decoders in der Empfängereinrichtung,
wobei in diesem Verfahren
die digitalen Standbilder waveletkodiert werden und
die Änderung darin besteht, dass die aus dem Fluss extrahierten Werte durch andere Werte ersetzt werden, so dass ein geänderter Hauptfluss im selben Nennformat wie der ursprüngliche Fluss und eine ergänzende Information erzeugt werden, die die Rekonstruktion des ursprünglichen Flusses durch einen Decoder gestattet, wobei das Verfahren außerdem Folgendes beinhaltet:

einen Schritt der Übertragung einer Untereinheit der ergänzenden Änderungsinformation zu der Empfängereinrichtung, wobei diese Untereinheit in Abhängigkeit von Informationen bestimmt wird, die von einem digitalen Profil des Empfängers stammen, um die ursprünglichen Wavelet-Koeffizienten wiederherzustellen, die zu einer in dem Bild vordefinierten räumlichen Zone gehören, unter Beibehaltung einer Gesamtverschlüsselung des Rests des Bildes, wobei diese Rekonstruktion adaptiv und progressiv in Abhängigkeit von diesen vom digitalen Profil des empfangenden Benutzers stammenden Informationen sind.

**2.** Verfahren zur gesicherten Verteilung von digitalen Standbildern nach Anspruch 1, bei dem die Änderung Folgendes erzeugt:

einen geänderten Hauptfluss und

eine ergänzende Information, die die Rekonstruktion des ursprünglichen Flusses durch einen Decoder gestattet, wobei das Verfahren Folgendes beinhaltet:

einen Schritt der Übertragung des geänderten Flusses, und außerdem
einen Schritt der Übertragung einer Untereinheit der ergänzenden Änderungsinformation zu der Empfängereinrichtung, wobei diese Untereinheit in Abhängigkeit von von einem materiellen Profil des Empfängers kommenden Informationen bestimmt wird.

3. Verfahren zur gesicherten Verteilung von digitalen Standbildern nach Anspruch 1 oder 2, **dadurch gekennzeichnet, dass** der ursprüngliche Fluss eine Eigenschaft der Skalierbarkeit bezüglich Auflösung besitzt.

4. Verfahren zur gesicherten Verteilung von digitalen Standbildern nach einem der Ansprüche 1 bis 3, **dadurch gekennzeichnet, dass** der ursprüngliche Fluss eine Eigenschaft der räumlichen Skalierbarkeit besitzt.

5. Verfahren zur gesicherten Verteilung von digitalen Standbildern nach einem der Ansprüche 1 bis 4, **dadurch gekennzeichnet, dass** der ursprüngliche Fluss eine Eigenschaft der qualitativen Skalierbarkeit besitzt.

6. Verfahren zur gesicherten Verteilung von digitalen Standbildern nach einem der Ansprüche 1 bis 5, **dadurch gekennzeichnet, dass** der ursprüngliche Fluss eine Eigenschaft der spektralen Skalierbarkeit besitzt.

7. Verfahren zur gesicherten Verteilung von digitalen Standbildern nach einem der Ansprüche 1 bis 6, **dadurch gekennzeichnet, dass** der geänderte Hauptfluss an der Empfängereinrichtung vor der Übertragung der ergänzenden Information zur Empfängereinrichtung verfügbar ist.

8. Verfahren zur gesicherten Verteilung von digitalen Standbildern nach einem der Ansprüche 1 bis 6, **dadurch gekennzeichnet, dass** ein Teil des geänderten Hauptflusses an der Empfängereinrichtung vor der Übertragung der ergänzenden Information zur Empfängereinrichtung verfügbar ist.

9. Verfahren zur gesicherten Verteilung von digitalen Standbildern nach einem der Ansprüche 1 bis 6, **dadurch gekennzeichnet, dass** der geänderte Hauptfluss und die ergänzende Information zusammen in Echtzeit übertragen werden.

10. Verfahren zur gesicherten Verteilung von digitalen Standbildern nach mindestens einem der Ansprüche 1 bis 9, **dadurch gekennzeichnet, dass** die Bestimmung der Untereinheit der ergänzenden Information auf den Eigenschaften der Skalierbarkeit des ursprünglichen Flusses beruht.

11. Verfahren zur gesicherten Verteilung von digitalen Standbildern nach mindestens einem der Ansprüche 1 bis 10, **dadurch gekennzeichnet, dass** die Bestimmung der Untereinheit der ergänzenden Information auf den Eigenschaften der granularen Skalierbarkeit der ergänzenden Information beruht.

12. Verfahren zur gesicherten Verteilung von digitalen Standbildern nach mindestens einem der Ansprüche 1 bis 11, **dadurch gekennzeichnet, dass** die Menge von in der Untereinheit enthaltenen Informationen einem in Abhängigkeit von dem Profil des Empfängers bestimmten Skalierbarkeitsniveau entspricht.

13. Verfahren zur gesicherten Verteilung von digitalen Standbildern nach mindestens einem der Ansprüche 1 bis 11, **dadurch gekennzeichnet, dass** der Typ von in der Untereinheit enthaltenen Informationen einem in Abhängigkeit von dem Profil des Empfängers bestimmten Skalierbarkeitsniveau entspricht.

14. Verfahren zur gesicherten Verteilung von digitalen Standbildern nach einem der Ansprüche 1 bis 13, **dadurch gekennzeichnet, dass** die ergänzende Information mindestens eine digitale Routine umfasst, die eine Funktion ausführen kann.

15. Verfahren zur gesicherten Verteilung von digitalen Standbildern nach Anspruch 14, **dadurch gekennzeichnet, dass** die zu jedem Empfänger übertragenen Funktionen für jeden Empfänger in Abhängigkeit von der Sitzung personalisiert werden.

16. Verfahren zur gesicherten Verteilung von digitalen Standbildern nach einem der Ansprüche 1 bis 15, **dadurch gekennzeichnet, dass** die ergänzende Information zuvor für jeden Empfänger in Abhängigkeit von der Sitzung verschlüsselt wird.

**17.** Verfahren zur gesicherten Verteilung von digitalen Standbildern nach einem der Ansprüche 1 bis 16, **dadurch gekennzeichnet, dass** die ergänzende Information in mindestens zwei Unterteile unterteilt wird.

**18.** Verfahren zur gesicherten Verteilung von digitalen Standbildern nach Anspruch 17, **dadurch gekennzeichnet, dass** die Unterteile der ergänzenden Information durch verschiedene Medien verteilt werden.

**19.** Verfahren zur gesicherten Verteilung von digitalen Standbildern nach Anspruch 17, **dadurch gekennzeichnet, dass** die Unterteile der ergänzenden Information durch dasselbe Medium verteilt werden.

**20.** Verfahren zur gesicherten Verteilung von digitalen Standbildern nach mindestens einem der Ansprüche 1 bis 19, **dadurch gekennzeichnet, dass** die ergänzende Information ganz oder teilweise auf einem physischen Träger übertragen wird.

**21.** Verfahren zur gesicherten Verteilung von digitalen Standbildern nach mindestens einem der Ansprüche 1 bis 19, **dadurch gekennzeichnet, dass** die ergänzende Information online übertragen wird.

**22.** Verfahren zur gesicherten Verteilung von digitalen Standbildern nach einem der Ansprüche 1 bis 21, **dadurch gekennzeichnet, dass** der Typ von in der Untereinheit enthaltenen Informationen in Abhängigkeit von dem Verhalten des Empfängers während der Verbindung mit dem Server oder in Abhängigkeit von seinen Gewohnheiten oder in Abhängigkeit von von einem Dritten mitgeteilten Daten aktualisiert wird.

**23.** Verfahren zur gesicherten Verteilung von digitalen Standbildern nach einem der Ansprüche 1 bis 22, **dadurch gekennzeichnet, dass** die Menge von in der Untereinheit enthaltenen Informationen in Abhängigkeit vom Verhalten des Empfängers während der Verbindung mit dem Server oder in Abhängigkeit von seinen Gewohnheiten oder in Abhängigkeit von von einem Dritten mitgeteilten Daten aktualisiert wird.

**24.** Verfahren zur gesicherten Verteilung von digitalen Standbildern nach einem der vorhergehenden Ansprüche, **dadurch gekennzeichnet, dass** es einen vorhergehenden Schritt der Analog/Digital-Umwandlung unter einem strukturierten Format umfasst, wobei das Verfahren auf ein analoges Signal angewandt wird.

**25.** Verfahren zur gesicherten Verteilung von digitalen Standbildern nach einem der vorhergehenden Ansprüche, **dadurch gekennzeichnet, dass** es einen vorhergehenden Schritt der Umkodierung eines digitalen Flusses ausgehend von einem beliebigen Format in ein Format umfasst, das Skalierbarkeitseigenschaften aufweist.

**26.** Verfahren zur gesicherten Verteilung von digitalen Standbildern nach mindestens einem der vorhergehenden Ansprüche, **dadurch gekennzeichnet, dass** die Standbilder eine Folge von zeitlich feststehenden Bildern bilden.

**27.** Verfahren zur gesicherten Verteilung von digitalen Standbildern nach Anspruch 26, **dadurch gekennzeichnet, dass** die Änderung der Datensequenzen bei mindestens zwei Bildern der Bilderfolge verschieden ist.

**28.** Verfahren zur gesicherten Verteilung von digitalen Standbildern Anspruch 26 oder 27, **dadurch gekennzeichnet, dass** die Änderung der Datensequenzen eines Bilds der Bilderfolge die Änderung der Datensequenzen der vorhergehenden Bilder in der zeitlichen Reihenfolge der Folge einschließt, und zwar beruhend auf den Eigenschaften der räumlichen und qualitativen Skalierbarkeit der Wavelet-Transformationen.

**29.** Verfahren zur gesicherten Verteilung von digitalen Standbildern nach mindestens einem der vorhergehenden Ansprüche, **dadurch gekennzeichnet, dass** die granulare Skalierbarkeit der aus den Untereinheiten bestehenden ergänzenden Information auf der qualitativen, räumlichen Skalierbarkeit und der Skalierbarkeit bezüglich der Auflösung der von einer Wavelet-Transformation stammenden Flüsse beruht.

**30.** Verfahren zur gesicherten Verteilung von digitalen Standbildern nach mindestens einem der vorhergehenden Ansprüche, **dadurch gekennzeichnet, dass** es ohne Qualitätsverlust ist.

**31.** Verfahren zur gesicherten Verteilung von digitalen Standbildern nach einem der vorhergehenden Ansprüche, **dadurch gekennzeichnet, dass** bei der Rekonstruktion des ursprünglichen Flusses eine unverwischbare und nicht wahrnehmbare Spur in den ursprünglichen Fluss eingefügt wird, wobei diese Spur ein eindeutiges Kennzeichen trägt.

**32.** Verfahren für die gesicherte Verteilung von digitalen Standbildern nach einem der vorhergehenden Ansprüche, **dadurch gekennzeichnet, dass** eine unverwischbare und nicht wahrnehmbare Spur in das Bild nach Rekonstruktion und Dekodierung des ursprünglichen Flusses eingefügt wird, wobei diese Spur ein eindeutiges Kennzeichen trägt.

**33.** Verfahren für die gesicherte Verteilung von digitalen Standbildern nach einem der Ansprüche 31 bis 32, **dadurch gekennzeichnet, dass** die unverwischbare und nicht wahrnehmbare Spur durch eine entsprechende Software, die den rekonstituierten Inhalt analysiert, erfassbar ist.

**34.** Verfahren zur gesicherten Verteilung von digitalen Standbildern nach einem der Ansprüche 31 bis 33, **dadurch gekennzeichnet, dass** das eindeutige Kennzeichen den Benutzer authentifiziert.

**35.** Verfahren zur gesicherten Verteilung von digitalen Standbildern nach einem der Ansprüche 31 bis 33, **dadurch gekennzeichnet, dass** das eindeutige Kennzeichen die Einrichtung authentifiziert, auf der der Algorithmus der Rekonstruktion des ursprünglichen Flusses ausgeführt wurde.

**36.** Verfahren zur gesicherten Verteilung von digitalen Standbildern nach einem der Ansprüche 31 bis 33, **dadurch gekennzeichnet, dass** das eindeutige Kennzeichen die von dem Benutzer eröffnete Sitzung identifiziert, während der die Rekonstitution des ursprünglichen Flusses ausgeführt wird.

**37.** Verfahren zur gesicherten Verteilung von digitalen Standbildern nach Anspruch 36, **dadurch gekennzeichnet, dass** die Verschlüsselungssitzung und die Entschlüsselungssitzung unter der Steuerung durch einen gesicherten Server ausgeführt werden, der die Rolle des vertrauenswürdigen Dritten spielt.

**38.** Verfahren zur gesicherten Verteilung von digitalen Standbildern nach Anspruch 36, **dadurch gekennzeichnet, dass** die Sitzung durch einen gesicherten Server identifiziert wird, der ein Register zur Verfügung hält, das für jede Sitzung Informationen über die Nummer der Sitzung, das Kennzeichen des Benutzers oder das Kennzeichen der Benutzereinrichtung, das Kennzeichen des Inhalts, der Gegenstand der Sitzung ist, und eine Datum-Uhrzeit-Gruppe umfasst.

**39.** Verfahren zur gesicherten Verteilung von digitalen Standbildern nach den Ansprüche 31 bis 38, **dadurch gekennzeichnet, dass** eine digitale Signatur ausgehend von dem rekonstituierten Fluss errechnet wird, wobei die unverwischbare und nicht wahrnehmbare Spur eine einzige und für jeden rekonstituierten Fluss unterschiedliche Signatur erzeugt, wobei diese Signatur auf einem gesicherten Server, der die Rolle eines vertrauenswürdigen Dritten spielt, gespeichert wird.

**40.** Verfahren zur gesicherten Verteilung von digitalen Standbildern nach einem der Ansprüche 31 bis 39, **dadurch gekennzeichnet, dass** der durch die Entschlüsselung rekonstituierte Fluss die gleiche visuelle Qualität wie der ursprüngliche Fluss hat und nur in auswertbarer Form existiert, wenn er diese Spur trägt.

**41.** Verfahren zur gesicherten Verteilung von digitalen Standbildern nach einem der Ansprüche 31 bis 40, **dadurch gekennzeichnet, dass** der durch die Entschlüsselung rekonstituierte Fluss nur in auswertbarer Form existiert, wenn die extrahierte digitale Signatur mit der Signatur identisch ist, die auf dem gesicherten Server gespeichert ist, der die Rolle eines vertrauenswürdigen Dritten spielt.

**42.** Verfahren zur gesicherten Verteilung von digitalen Standbildern nach den Ansprüchen 31 bis 41, **dadurch gekennzeichnet, dass** das Verfahren auf einen audiovisuellen digitalen Fluss anwendbar ist, der von einer Eigentümernorm oder einem Eigentümerstandard stammt.

**Claims**

**1.** Method of distributing still digital images in a secure manner in the form of a stream comprising data sequences, each containing a part of the image data, which method comprises:

a step of modifying the original stream by modifying at least some of said data sequences, as well as
a step of transmitting the modified stream and
a reconstruction step with the aid of a decoder on the addressee equipment, and as part of this method,

the still digital images are wavelet encoded and

said modification involves replacing values extracted from the stream with other values in order to produce a modified main stream in the same nominal format as the original stream and complementary information enabling the original stream to be reconstructed by a decoder,

the method additionally comprising

a step of transmitting a sub-set of said complementary modification information to the addressee equipment, said sub-set being determined as a function of information derived from a digital profile of the addressee in order to reconstitute the original wavelet coefficients belonging to a predefined spatial zone within the image whilst the rest of the image is kept completely scrambled, said reconstruction being adaptive and progressive as a function of said information derived from said digital profile of the addressee user.

2. Method of distributing still digital images in a secure manner as claimed in claim 1, in which said modification produces a modified main stream and

complementary information enabling the original stream to be reconstructed by a decoder,

which method comprises

a step of transmitting the modified stream and also comprises

a step of transmitting to the addressee equipment a sub-set of said complementary modification information, said sub-set being determined as a function of information derived from a hardware profile of the addressee.

3. Method of distributing still digital images in a secure manner as claimed in claim 1 or 2, **characterised in that** said original stream has a scalability property based on resolution.

4. Method of distributing still digital images in a secure manner as claimed in one of claims 1 to 3, **characterised in that** said original stream has a spatial scalability property.

5. Method of distributing still digital images in a secure manner as claimed in one of claims 1 to 4, **characterised in that** said original stream has a qualitative scalability property.

6. Method of distributing still digital images in a secure manner as claimed in one of claims 1 to 5, **characterised in that** said original stream has a spectrum scalability property.

7. Method of distributing still digital images in a secure manner as claimed in one of claims 1 to 6, **characterised in that** the modified main stream is available on the addressee equipment before the complementary information is transmitted to the addressee equipment.

8. Method of distributing still digital images in a secure manner as claimed in one of claims 1 to 6, **characterised in that** a part of the modified main stream is available on the addressee equipment before the complementary information is transmitted to the addressee equipment.

9. Method of distributing still digital images in a secure manner as claimed in one of claims 1 to 6, **characterised in that** the modified main stream and complementary information are transmitted together in real time.

10. Method of distributing still digital images in a secure manner as claimed in at least one of claims 1 to 9, **characterised in that** the sub-set of said complementary information is determined on the basis of the scalability properties of said original stream.

11. Method of distributing still digital images in a secure manner as claimed in at least one of claims 1 to 10, **characterised in that** said sub-set of said complementary information is determined on the basis of the granular scalability properties of said complementary information.

12. Method of distributing still digital images in a secure manner as claimed in at least one of claims 1 to 11, **characterised in that** the quantity of data contained in said sub-set corresponds to a scalability level determined as a function of the addressee's profile.

13. Method of distributing still digital images in a secure manner as claimed in at least one of claims 1 to 11, **characterised in that** the type of data contained in said sub-set corresponds to a scalability level determined as a function of the addressee's profile.

14. Method of distributing still digital images in a secure manner as claimed in any one of claims 1 to 13, **characterised in that** said complementary information comprises at least one digital routine capable of executing a function.

15. Method of distributing still digital images in a secure manner as claimed in claim 14, **characterised in that** said functions transmitted to each addressee are personalised for each addressee as a function of the session.

16. Method of distributing still digital images in a secure manner as claimed in any one of claims 1 to 15, **characterised in that** said complementary information is encrypted for each addressee beforehand as a function of the session.

17. Method of distributing still digital images in a secure manner as claimed in any one of claims 1 to 16, **characterised in that** said complementary information is sub-divided into at least two sub-parts.

18. Method of distributing still digital images in a secure manner as claimed in claim 17, **characterised in that** said sub-parts of the complementary information are  distributed by different media.

19. Method of distributing still digital images in a secure manner as claimed in claim 17, **characterised in that** said sub-parts of complementary information are distributed by the same media.

20. Method of distributing still digital images in a secure manner as claimed in at least one of claims 1 to 19, **characterised in that** all or part of the complementary information is transmitted on a physical vector.

21. Method of distributing still digital images in a secure manner as claimed in at least one of claims 1 to 19, **characterised in that** the complementary information is transmitted on-line.

22. Method of distributing still digital images in a secure manner as claimed in any one of claims 1 to 21, **characterised in that** the type of information contained in said sub-set is updated as a function of the behaviour of said addressee during the connection to the server or as a function of his habits or as a function of data communicated by a third party.

23. Method of distributing still digital images in a secure manner as claimed in any one of claims 1 to 22, **characterised in that** the quantity of information contained in said sub-set is updated as a function of the behaviour of said addressee during the connection to the server or as a function of his habits or as a function of data communicated by a third party.

24. Method of distributing still digital images in a secure manner as claimed in any one of the preceding claims, **characterised in that** it comprises a prior step of analogue-to-digital conversion in a structured format, the method being applied to an analogue signal.

25. Method of distributing still digital images in a secure manner as claimed in any one of the preceding claims, **characterised in that** it comprises a prior step of trans-coding a digital stream from any format to a format having scalability properties.

26. Method of distributing still digital images in a secure manner as claimed in at least one of the preceding claims, **characterised in that** said still images constitute a succession of images fixed in time.

27. Method of distributing still digital images in a secure manner as claimed in claim 26, **characterised in that** said modification to said data sequences is different for at least two images of said succession of images.

28. Method of distributing still digital images in a secure manner as claimed in one of claims 26 or 27, **characterised in that** said modification to said data sequences of an image in said succession of images includes the modification of said data sequences of the preceding images in the chronological order of the succession based on the spatial and qualitative scalability properties of the wavelet transformations.

29. Method of distributing still digital images in a secure manner as claimed in at least one of the preceding claims, **characterised in that** the granular scalability of said complementary information made up of said sub-sets is based on the qualitative, spatial and resolution scalabilities of the streams resulting from a wavelet transformation of the images.

30. Method of distributing still digital images in a secure manner as claimed in at least one of the preceding claims, **characterised in that** it does not result in a loss of quality.

31. Method of distributing still digital images in a secure manner as claimed in any one of the preceding claims, **characterised in that** when said original stream is being reconstructed, an indelible and imperceptible trace is inserted in said original stream, which trace carries an unambiguous identifier.

32. Method of distributing still digital images in a secure manner as claimed in any one of the preceding claims, **characterised in that** an indelible and imperceptible trace is inserted in the image after reconstructing and decoding said original stream, which trace carries an unambiguous identifier.

33. Method of distributing still digital images in a secure manner as claimed in one of claims 31 to 32, **characterised in that** said indelible and imperceptible trace can be detected by appropriate software which analyses the reconstituted content.

34. Method of distributing still digital images in a secure manner as claimed in one of claims 31 to 33, **characterised in that** said unambiguous identifier authenticates the user.

35. Method of distributing still digital images in a secure manner as claimed in one of claims 31 to 33, **characterised in that** said unambiguous identifier authenticates the equipment on which the algorithm for reconstructing the original stream was run.

36. Method of distributing still digital images in a secure manner as claimed in one of claims 31 to 33, **characterised in that** said unambiguous identifier identifies the session opened by the user during which reconstitution of the original stream was run.

37. Method of distributing still digital images in a secure manner as claimed in claim 36, **characterised in that** the scrambling session and the descrambling session are run under the control of a secure server playing the role of trusted third party.

38. Method of distributing still digital images in a secure manner as claimed in claim 36, **characterised in that** said session is identified by a secure server which holds available a register containing, for each session, information about the session number, user's identifier or identifier of the user's equipment, the identifier of the content on which the session is based and a date-time group.

39. Method of distributing still digital images in a secure manner as claimed in claims 31 to 38, **characterised in that** a digital signature is calculated from the reconstituted stream, said indelible and imperceptible trace generates a unique and different signature for each reconstituted stream and this signature is stored on a secure server playing the role of trusted third party.

40. Method of distributing still digital images in a secure manner as claimed in one of claims 31 to 39, **characterised in that** the stream reconstituted by descrambling is of the same visual quality as the original stream and exists in a form in which it can not be used unless it carries said trace.

41. Method of distributing still digital images in a secure manner as claimed in one of claims 31 to 40, **characterised in that** the stream reconstituted by descrambling exists in a form which can not be used unless the digital signature extracted is identical to the signature stored on the secure server playing the role of trusted third party.

42. Method of distributing still digital images in a secure manner as claimed in claims 31 to 41, **characterised in that** said method is applied to an audio-visual digital stream stemming from a proprietary norm or standard.

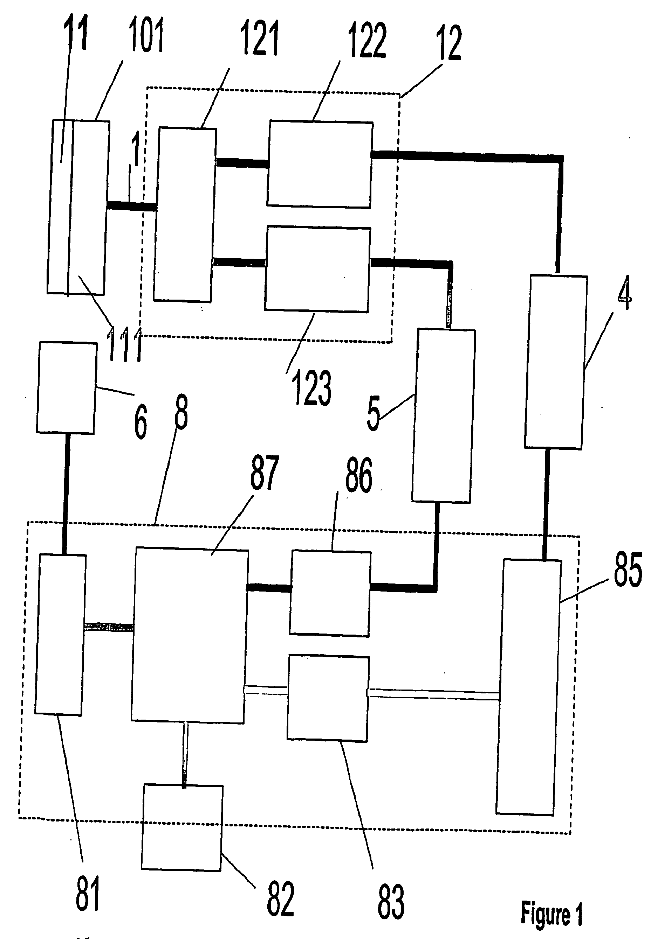

Figure 1

**Documents brevets cités dans la description**

- EP 1011269 A1
- WO 2004062287 A
- WO 9842098 A
- FR 2003002915 W
- WO 2004032478 A

**Littérature non-brevet citée dans la description**

- **ESKICIOGLU et al.** An integrated approach to encrypting scalable video. *Proceedings of the 2002 IEEE International Conference on Multimedia and Expo, Lausanne, Suisse,* 2002
- **GRIWODZ et al.** Protecting VoD the EasierWay. *Proceedings of the ACM Multimedia,* Septembre 1998